(19) Europäisches Patentamt
European Patent Office
Office européen des brevets

(11) **EP 1 986 831 B1**

(12) **EUROPEAN PATENT SPECIFICATION**

(45) Date of publication and mention
of the grant of the patent:
**29.04.2009 Bulletin 2009/18**

(51) Int Cl.:
***B29B 11/12*** *(2006.01)*     ***B29C 49/02*** *(2006.01)*

(21) Application number: **07700537.9**

(22) Date of filing: **26.01.2007**

(86) International application number:
**PCT/IB2007/000253**

(87) International publication number:
**WO 2007/088475 (09.08.2007 Gazette 2007/32)**

(54) **PREFORMS FOR OBTAINING CONTAINERS AND CORRESPONDING CONTAINER**

VORFORMLINGE ZUM ERHALT VON BEHÄLTERN UND ENTSPRECHENDER BEHÄLTER

PRÉFORMES PERMETTANT D'OBTENIR DES CONTENANTS ET CONTENANT CORRESPONDANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.02.2006 IT MO20060037**

(43) Date of publication of application:
**05.11.2008 Bulletin 2008/45**

(73) Proprietor: **SACMI COOPERATIVA MECCANICI IMOLA SOCIETA' COOPERATIVA 40026 Imola (BO) (IT)**

(72) Inventors:
• **CAMERANI, Matteo**
  **I-48026 Russi (RA) (IT)**
• **PARRINELLO, Fiorenzo**
  **I-40059 Medicina (BO) (IT)**

(74) Representative: **Colò, Chiara et al**
**Bugnion S.p.A.**
**Via M. Vellani Marchi, 20**
**41100 Modena (IT)**

(56) References cited:
**EP-A- 1 579 979**     **EP-A1- 1 208 957**
**WO-A-20/05123366**     **US-A- 4 820 795**

**Description**

The invention relates to a compression-moulded preform, particularly for obtaining a container, for example a bottle, through stretch-blow moulding. The invention further relates to a stretch-blow moulded container, for example a bottle.

The preforms for obtaining bottles usually have a hollow body bounded by a substantially cylindrical side wall and by an end wall that closes an end of the hollow body. These preforms can be obtained through injection moulding, inside a mould comprising a punch that reproduces the internal shape of the preform and a die suitable for shaping the preform externally. The punch and the die are reciprocally movable between a closed position and an open position. In the closed position, between the punch and the die there is defined a forming chamber, in which the preform can be shaped, whilst in the open position the punch and the die are spaced from one another so that the preform can be extracted from the mould.

The die comprises an injection conduit through which, in the closed position, the plastics are injected into the mould that are intended to form the preform. The injection conduit leads into the forming chamber at an injection point arranged in a central region of the end wall.

In order to obtain a preform, it is first of all necessary to arrange the punch and the die in the closed position.

Subsequently, the plastics are introduced into the mould through the injection conduit until they completely fill the forming chamber. At this point, the injection of plastics is stopped and the preform is cooled inside the mould arranged in the closed position. When the preform is sufficiently cooled, the mould can be opened and the preform that has just been formed can be removed.

In the preforms of the type disclosed above, the end wall is a critical zone that often has numerous defects. In particular, at a central region of the end wall positioned near the point into which the injection conduit leads, an opaque zone is usually formed that, as the preform is usually transparent, is also visible to the naked eye. This phenomenon is named "stress whitening". The opaque zone formed in the central region of the end wall may be a starting point of breakages, particularly during the bottle blowing step.

The preforms of the above disclosed type are normally cooled in a rather dishomogeneous manner. In fact, whilst the plastics are filling the forming chamber, the punch and the die are cooled through suitable cooling means. On the other hand, in the injection conduit rather high temperatures are detectable, which are necessary so that the plastics do not cool and can flow easily inside the injection conduit to fill the forming chamber. Therefore, the plastics forming the central region of the end wall arranged near the injection conduit cool more slowly than those one forming the side wall, which may cause residual tensions inside the preform. The residual tensions frequently cause, drawbacks when the container is stretch-blow moulded.

EP 1208957 discloses a stretch blow-molded container obtained by biaxially stretching and blow-molding a thermoplastic polyester and which exhibits heat resistance or heat resistance and pressure resistance to withstand sterilization by heating at the time of hot filling.

US 4820795 discloses a polyester vessel having mouth, side wall and bottom portions formed of a polyester composed mainly of ethylene terephthalate units, wherein the thermoplastic polyester is a polyester containing a catalyst residue in an amount smaller than 1000 ppm as the metal.

An object of the invention is to improve the preforms for obtaining containers, as well as the containers obtained from such preforms.

Another object is to provide preforms provided with an end wall that is substantially devoid of defects.

Still another object is to obtain preforms having limited residual tensions.

A further object is to obtain preforms and containers in which there is a reduced risk that breakages will happen, either during stretch-blow moulding or during the subsequent life of the container.

In a first aspect of the invention, there is provided a preform according to claim 1.

Owing to this aspect of the invention, it is possible to obtain a preform in which the defects present in the end wall are drastically reduced with respect to prior-art preforms. In fact, in the preforms according to the first aspect of the invention, the end wall is not more crystalline than the side wall. This enables the defects to be eliminated that are detectable in the prior-art preforms due to the high degree of crystallinity of the end wall, such as, for example, the presence of opaque zones that are aesthetically undesired and at which breakages may start when the container is stretch-blow moulded.

In a second aspect of the invention, there is provided a container according to claim 16.

Owing to the second aspect of the invention, it is possible to obtain a container having good mechanical resistance even at the base wall and in which the risks are reduced that breakages may originate from the base wall both during stretch-blow moulding and during the subsequent life of the container.

Further embodiments of the present invention are the subject of dependent claims 2 to 15 and 17 to 20.

The invention will be better understood and carried into effect with reference to the attached drawings, in which an embodiment of the invention is shown by way of non-limiting example, in which:

Figure 1 is a section taken along the longitudinal axis of a prior-art preform;

Figure 2 is a schematic section of a mould for injection-moulding the preform in Figure 1;

Figure 3 is a section taken along the longitudinal axis of a preform according to the invention;

Figure 4 is a schematic section of a mould for obtaining the preform in Figure 3, in an open position;

Figure 5 is a section like the one in Figure 4, showing the mould in an intermediate position;

Figure 6 is a section like the one in Figure 4, showing the mould in a closed position;

Figure 7 is a graph showing the DSC diagram during the heating of a sample of material taken from the preform in Figure 3;

Figure 8 is a graph showing the DSC diagrams like those in Figure 7, for a plurality of samples taken from the preform in Figure 3;

Figure 9 is a graph like the one in Figure 8, which refers to samples taken from a prior-art preform;

Figure 10 is a table containing the enthalpy values measured in a compression-moulded preform;

Figure 11 is a table containing the enthalpy values measured in an injection-moulded preform;

Figure 12 is a graph obtained from the tables in Figures 10 and 11;

Figure 13 is a table containing the glass transition temperature values measured in a compression-moulded preform and in an injection-moulded preform;

Figure 14 is a graph obtained from the table in Figure 13;

Figure 15 is a schematic section of a bottle obtained through stretch-blow moulding of a preform;

Figure 16 is a table showing the results of an analysis performed on a bottle;

Figure 17 is a table showing the results of an analysis performed on another bottle;

Figure 18 is a graph showing how the specific residual melting enthalpy varies according to the temperature of crystallization in some bottles.

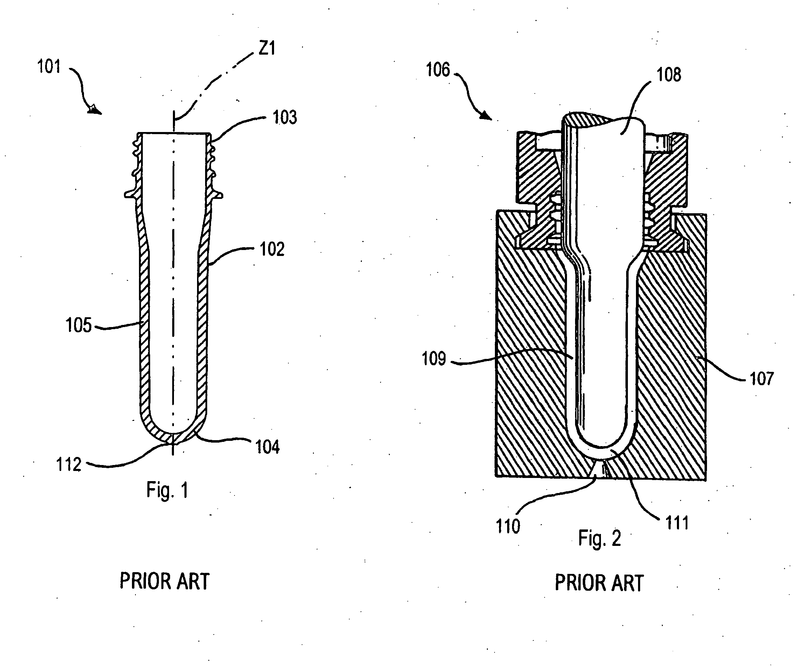

Figure 1 shows a preform 101 according to the prior art, comprising a hollow body 102, which is substantially cylinder-shaped, having a side wall 105 that extends around a longitudinal axis Z1. The hollow body 102 is provided, at an end thereof, with a mouth 103 also known as "finish" that is suitable for engaging with a cap of a container. At a further end of the hollow body 102 opposite the mouth 103 there is provided an end wall 104 that extends transversely to the longitudinal axis Z1 and is concave towards the inside of the preform 101.

The preform 101 was obtained through injection moulding, by using a mould 106 of the type shown in Figure 2. The mould 106 comprises a die 107, suitable for externally shaping the preform 101, and a punch 108, suitable for internally shaping the preform 101. The die 107 and the punch 108 are movable in relation to one another between a closed position, shown in Figure 2, and an open position that is not shown. In the closed position, between the die 107 and the punch 108 there is defined a forming chamber 109 in which the preform 101 can be formed. In the open position, the die 107 and the punch 108 are spaced apart from one another to enable the preform 101 that has just been formed to be extracted from the mould 106.

An injection conduit 110 is obtained in the die 107 and leads into the forming chamber 109 near a passage zone 111 intended to form a central region of the end wall 104.

In order to obtain the preform 101, the die 107 and the punch 108 are positioned in the closed position and melted plastics are injected into the forming chamber 109 through the injection conduit 110. The melted plastics, passing through the passage zone 111, reach the zones of the forming chamber 109 in which the hollow body 102 and the mouth 103 are formed until they fill the entire forming chamber 109.

When the forming chamber 109 has been completely filled, the mould 106 remains in the closed position and is cooled so that the plastics forming the preform 101 start to solidify.

Subsequently, the die 107 and the punch 108 reach the open position and the preform 101 is extracted from the mould 106.

The preforms 101 obtained though injection moulding are easily recognisable because on the outer surface of the end wall 104 a feedhead 112 is visible at the zone into which the injection conduit 110 leads.

The preforms 101 of the above disclosed type often have defects on the end wall 104. In fact, in the passage zone 111 the plastics are subject to very great shearing stresses, due to which the polymeric chains forming the plastics arrange themselves parallel to one another. In the end wall 104 crystalline zones are thus formed that are not desired inasmuch as they are opaque zones that are visible to the naked eye and compromise the aesthetic appearance of the preform. Furthermore, the crystalline zones may cause other drawbacks and in particular they may be points at which breakages may start when the preform undergoes to a stretch-blow moulding process to obtain a container, such as a bottle, therefrom.

The plastics forming the preform 101 are further cooled in a rather uneven manner inside the forming chamber 109. In fact, while the plastics are filling the forming chamber 109, the die 107 and the punch 108 are cooled through a plurality of cooling conduits that are not shown. In the injection conduit 110, on the other hand, the plastics are at a very high temperature, so as to have a viscosity that enables the plastics to fill easily the forming chamber 109.

The zones of the end wall 104 arranged near the injection conduit 110 are thus cooled in a different manner from the side wall 105, which causes the plastics to shrink differently and generates residual tensions in the preform 101. The residual tensions may cause drawbacks when the preform is stretch-blow moulded for obtaining the container.

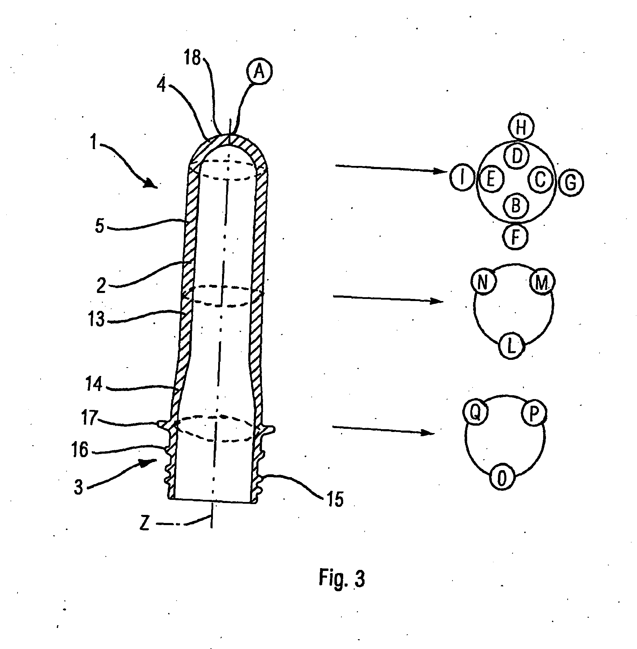

Figure 3 shows a preform 1 according to the invention, which can be used for obtaining a container, such as, for example, a bottle, through a process of two-stage stretch-blow moulding. This process provides for moulding a preform, leaving the preform to cool to ambient temperature, and subsequently subjecting the preform to stretch-blow moulding to obtain a container therefrom. Several days as well may elapse between moulding of the preform and stretch-blow moulding of the container. Further, stretch-blow moulding of the container can be performed by a different person from the one who has moulded the preform, for example if the preforms are sold to a manufacturer of containers.

The preform 1 is made of plastics, for example polyethylene terephthalate (PET), polypropylene (PP), polyvinyl chloride (PVC), high-density polyethylene (HDPE) or polyethylene naphthalate (PEN). The preform 1 comprises a hollow body 2 having a side wall 5 that extends around a longitudinal axis Z. The side wall 5 comprises a substantially cylindrical portion 13 and a slightly conical portion 14 arranged in sequence along the longitudinal axis Z. Near the slightly conical portion 14, the side wall 5 is provided with a mouth 3 comprising a threaded portion 15, an annular projection 16 and a collar 17. The mouth 3 is also called "finish" because it does not undergo substantial variations during the stretch-blow moulding process through which the container is obtained from the preform 1. The mouth 3 is suitable for engaging, at the threaded portion 15, a cap that closes the container.

At an end thereof opposite the mouth 3, the hollow body 2 is closed by an end wall 4 that extends transversely to the longitudinal axis Z. The end wall 4 is generally dome-shaped, i.e. it is concave with the concavity facing the inside of the preform 1.

The preform 1 is compression-moulded, as can be easily recognised because the end wall 4 is bounded by a substantially smooth external surface 18, even near the longitudinal axis Z. In other words, the end wall 4 does not have the feedhead that can be seen in the injection-moulded preforms in the region into which the injection conduit leads.

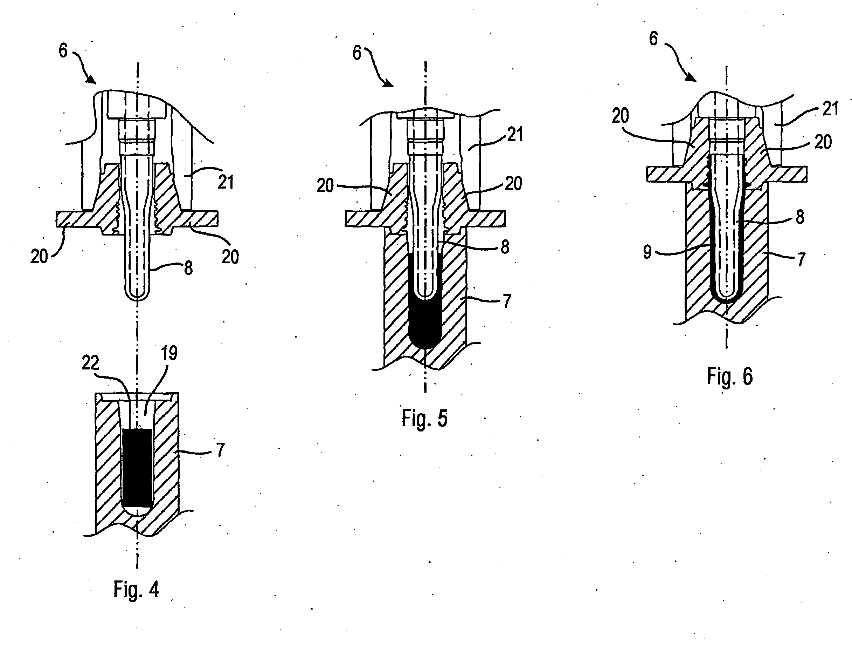

Figures 4 to 6 show a mould 6 that can be used to form the preform 1 in Figure 3. The mould 6 comprises a die 7 provided with a cavity 19 in which the side wall 5 and the end wall 4 can be shaped externally. The mould 6 further comprises a punch 8 for internally shaping the preform 1 and a pair of movable elements 20 for shaping the mouth 3 externally. A sleeve 21 interacts with the movable elements 20 to keep them close together.

As shown in Figure 4, the mould 6 is initially in an open position, in which the die 7 is spaced apart from the punch 8, so that it is possible to deposit into the cavity 19 a dose 22 of melted plastics, by means of a transferring device that is not shown. Subsequently, the die 7 is brought near the punch 8 and reaches an intermediate position, shown in Figure 5, in which the die 7 abuts on the movable elements 20. In this configuration, the punch 8 has already started to interact with the plastics forming the dose 22.

The die 7 continues to move to the punch 8 together with the movable elements 20 until it reaches a closed position, shown in Figure 6, in which between the die 7 and the punch 8 there is defined a forming chamber 9 having a shape corresponding to the preform 1. The mould 6 remains in the closed position for a sufficient time to form the preform 1 and cool the latter through cooling means that is not shown.

Subsequently, the mould 6 opens so that the preform 1 that has just been formed can be extracted and it is possible to start a new moulding cycle.

In order to obtain the preform 1, the process parameters were used that will be summarised below:

- temperature of the melted plastics: less than 280°C, for example equal to 275°C;
- temperature of the die 7, of the punch 8 and of the movable elements 20: comprised between 5 and 15°C;
- plastics moulding pressure inside the forming chamber 9: less than 600 bar, for example equal to 450 bar;
- filling speed with which the plastics fill the forming chamber 9: less than 0.2 m/s;
- maximum shear stress to which the plastics are subjected in the forming chamber 9 during moulding: less than 0.4 MPa, for example equal to 0.25 MPa;
- plastics used: PET with intrinsic viscosity comprised between 0.71 and 0.81 dl/g, for example equal to 0.8 dl/g.

Proceeding as indicated above, it is possible to obtain good-quality preforms 1 because the plastics are subjected to limited stresses during moulding. In fact, the maximum shear stress that is exerted on the dose is limited and the plastics can fill the forming chamber 9 by moving at a relatively low speed and in a regular manner. Further, the dose 22 starts to interact with the punch 8, and then the plastics start to fill the space defined between the die 7 and the punch 8, before the closed position is reached. In this way, the plastics can fill the forming chamber 9 by passing through relatively wide passage zones. Lastly, the plastics forming the end wall 4 are not subject to substantial motions when the preform 1 is compression-moulded, i.e. the plastics do not have to flow to fill the forming chamber as on the other hand occurs with injection moulding. Thus the end wall 4 is a not particularly critical zone of the preform 1.

Further, the mould 6 can be cooled in a substantially even manner inasmuch as a passage zone is not definable into which all the plastics have to flow that are intended to form the preform and it is therefore possible to start to cool only after filling the entire forming chamber.

It should incidentally be noted that in injection moulding a forming device is normally used comprising a plurality of moulds 106 positioned on a plate so as to define the lines and columns of a matrix. The moulds 106 are cooled by a single cooling fluid coming from a common supply conduit, which makes it difficult to control effectively the cooling conditions of each mould 106. For example, the moulds 106 positioned on the periphery of the plate may be cooled more than those positioned in the centre of the plate. The preforms obtained in different moulds 106 may therefore have physical and chemical properties that are different from one another.

On the other hand, in compression moulding the moulds 6 generally constitute single units that are supplied and cooled independently of one another. Cooling of each mould 6 can thus be controlled in the most suitable way regardless of the cooling of the other moulds. In this way, it is possible to obtain preforms having properties that are substantially homogeneous to one another.

From the preform 1 a plurality of samples were taken, indicated by letters from A to Q in Figure 3. As can be seen, sample A was taken at a central region of the end wall 4, said central region being positioned near the longitudinal axis Z. Samples B, C, D and E were taken from a connecting zone between the side wall 5 and the end wall 4, on the inner surface of the preform. Samples F, G, H and I were taken from the aforesaid connecting zone, on the outer surface of the preform.

Samples L, M and N were taken from about half way along the side wall 5, whilst Samples O, P and Q were taken from near the collar 17.

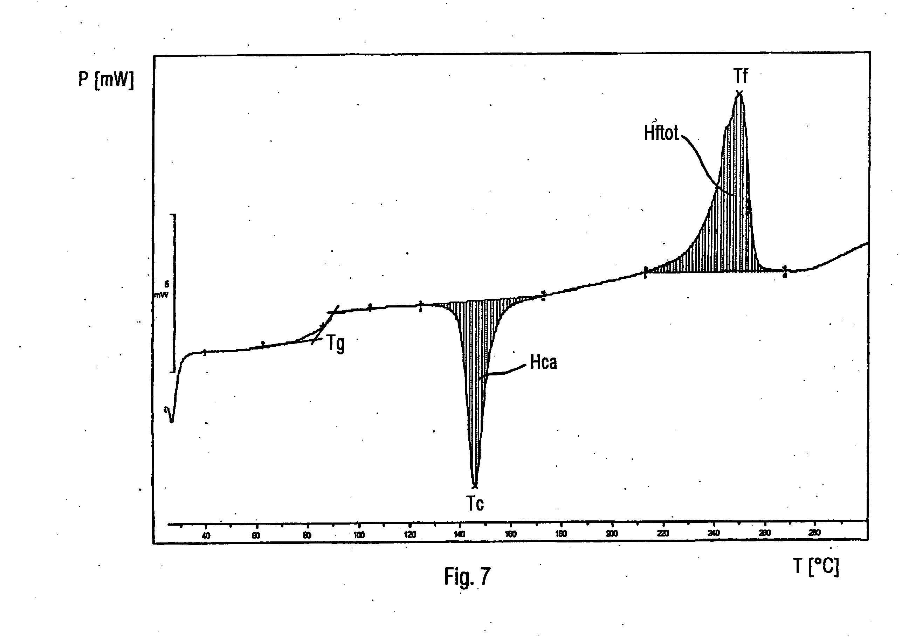

On the so obtained samples a differential scanning calorimetry (DSC) analysis was performed, the results of which are shown in Figure 7. The differential scanning calorimetry enables multiple aspects of a sample to be studied, such as for example structure or physical state transformations, based on the fact that such transformations occur with the emission or absorption of heat. The sample that it is desired to study is heated together with a reference sample in a system that, during heating, keeps the sample to be studied at the same temperature as the reference sample, supplying additional heat to one or other of the samples and recording the quantity of heat supplied in function of the temperature. This is obtained with an electronic system that controls the temperatures of the two samples, compares the temperatures continuously and adjusts the electric current, and therefore the power, necessary for heating each sample when the temperatures of the two samples tend to differ from one another. A graph is thus obtained, of the type shown in Figure 7, showing how the energy varies that is absorbed by the sample to be studied, or is emitted by the latter, during heating.

The graph in Figure 7 was obtained by heating a sample taken from the preform 1 from ambient temperature to a final temperature of 300°C, at a heating speed of 20°C per minute.

In a first temperature range, immediately above ambient temperature, the energy absorbed by the sample increases in rather a regular manner. Subsequently, the graph in Figure 7 has an inflection point at which the so-called glass transition temperature ($T_g$) of the sample is defined. The latter in fact comprises a crystalline fraction, inside which the molecules of the plastics are arranged in an ordered manner, and an amorphous fraction, in which the molecules are on the other hand arranged in a disorderly manner. Below the glass transition temperature, the molecules of the amorphous fraction are practically immobile, i.e. they are as it were "frozen" in a glass structure. Above the glass transition temperature, the molecules of the amorphous fraction acquire a certain capacity to move in relation to one another and, accordingly, the deformability of the sample increases considerably.

By continuing to increase the temperature above Tg, in the graph in Figure 7 an exothermic peak is definable at which crystallisation of a part of the amorphous fraction originally present in the sample occurs. In other words, some molecules forming the amorphous fraction of the plastics arrange themselves so as to form a crystalline lattice. The peak temperature is the crystallisation temperature $T_c$, whilst the peak area is the crystallisation enthalpy $H_{ca}$ of the amorphous part that is able to crystallise during heating. Both the crystallisation temperature and crystallisation enthalpy depend on a plurality of factors including, for example, the length and orientation of the polymeric chains, the presence of nucleants inside the sample, the percentage of material originally in an amorphous state, and so on. In the example shown in Figure 7, the crystallisation temperature is 145.78°C and crystallisation enthalpy is 157.66 mJ.

By continuing to heat the sample above crystallisation temperature, an endothermic peak is noted at which the crystalline portion included in the sample melts. The temperature of the endothermic peak is the melting temperature $T_f$ of the sample, whilst the area subtended by the peak is the total melting enthalpy of the crystalline portion $H_{ftot}$. In the specific case of Figure 7, the melting temperature is 248.12°C and total melting enthalpy is 247.12 mJ. Also the melting temperature and the melting enthalpy depend on numerous factors, as already seen for crystallisation temperature and crystallisation enthalpy.

The crystalline portion of the material that melts at the melting temperature $T_f$ is the sum of the crystalline fraction that was originally present in the sample and of the further crystalline fraction that was generated at the crystallisation temperature $T_c$. The following formula therefore applies:

$$H_{ftot} = H_{fc1} + H_{fc2}$$

where $H_{ftot}$ is the total melting enthalpy of the sample, $H_{fc1}$ is the melting enthalpy of the crystalline fraction that was originally present in the sample and $H_{fc2}$ is the melting enthalpy of the further crystalline fraction that is formed at the crystallisation temperature $T_c$ when part of the initial amorphous fraction is crystallised.

The melting enthalpy $H_{fc2}$ of the further crystalline fraction is substantially the same as the crystallisation enthalpy $H_{ca}$ of the part of amorphous fraction that has arranged itself in a crystalline form at the crystallisation temperature. Thus the difference between the total melting enthalpy $H_{ftot}$, which as already said is determinable by the area of the melting peak, and the crystallisation enthalpy $H_{ca}$, which as already said is determinable by the area of the crystallisation peak, is the so-called "residual melting enthalpy" $\Delta H_{diff}$, or the melting enthalpy of the crystalline fraction originally present in the sample. The following formula applies:

$$\Delta H_{diff} = H_{fc1} = H_{ftot} - H_{fc2} = H_{ftot} - H_{ca}$$

As can be easily understood from the previous definition, the residual melting enthalpy $\Delta H_{diff}$ is linked to the initial degree of crystallinity of the sample. In fact, if the initial sample contains a high percentage of crystalline phase and a low percentage of amorphous phase, the crystallisation enthalpy of the amorphous part $H_{ca}$ is rather low. The sample thus has a high residual melting enthalpy $\Delta H_{diff}$. On the other hand, an initial sample with a low percentage of crystalline phase and a high percentage of amorphous phase has high values of the crystallisation enthalpy of the amorphous part $H_{ca}$ and low values of the melting enthalpy of the original crystalline fraction $H_{fc1}$. As a result, the residual melting enthalpy $\Delta H_{diff}$ is rather low. It can thus be asserted that the greater the residual melting enthalpy $\Delta H_{diff}$ of a sample, the greater the percentage of crystalline phase originally present in that sample.

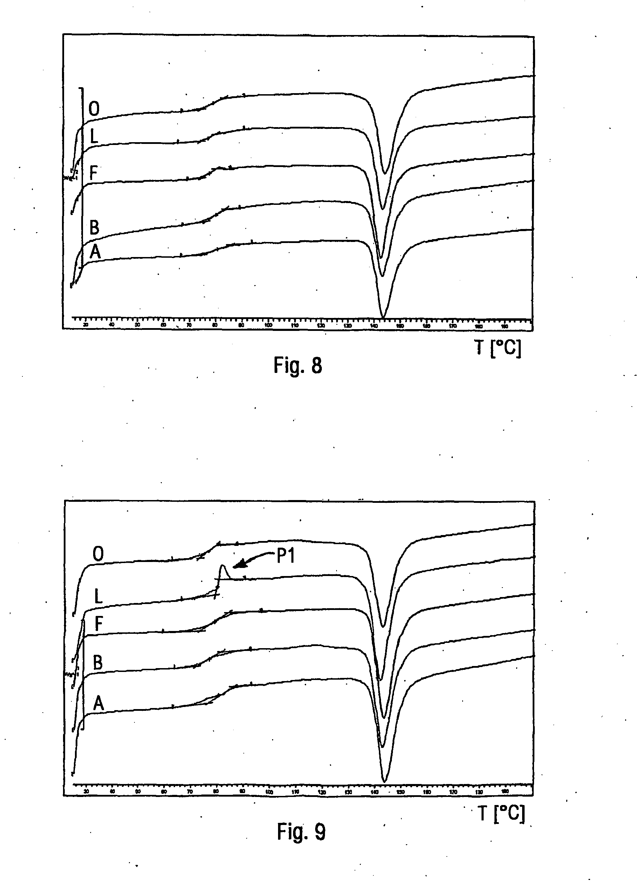

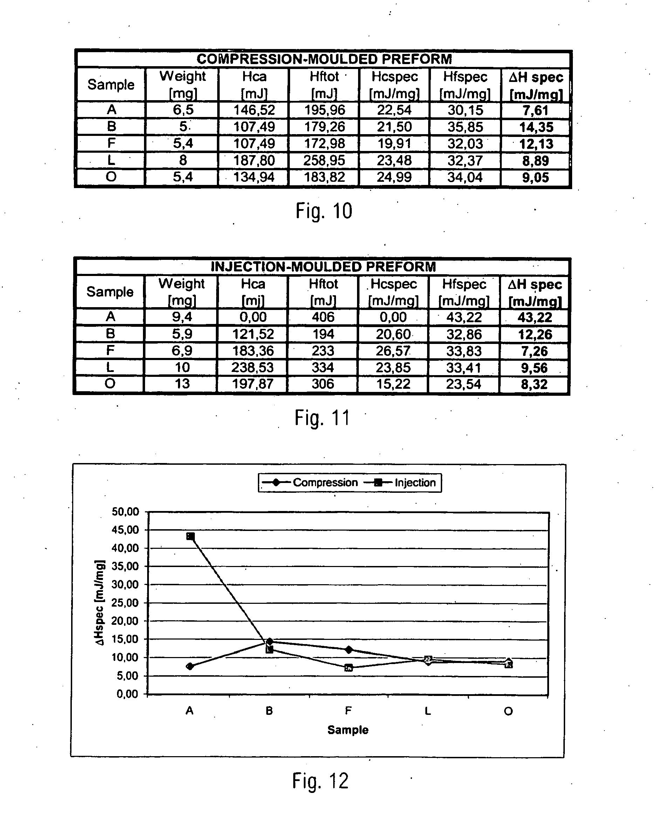

From the preform 1, samples A, B, F, L, O were taken, which are positioned as shown in Figure 3. After being weighed, the aforesaid samples were subjected to DSC analysis, obtaining the curves shown in Figure 8 and the numeric values shown in Figure 10. In particular, the DSC analysis enabled the crystallisation enthalpy of the amorphous part $H_{ca}$ that was crystallised during heating and the total melting enthalpy $H_{ftot}$ to be determined. By dividing $H_{ca}$ and

$H_{ftot}$ by the weight of the sample, the specific crystallisation enthalpy of the amorphous part $H_{cspec}$ and the specific total melting enthalpy $H_{fspec}$ are obtained. The difference between the specific total melting enthalpy $H_{fspec}$ and the specific crystallisation enthalpy of the amorphous part $H_{cspec}$ is the specific residual melting enthalpy $\Delta H_{spec}$, the values of which are shown in the last column of Figure 10.

Similar tests were conducted on samples A, B, F, L, O taken from an injection-moulded preform according to the prior art. Figure 9 shows the curves obtained from the DSC analysis of the samples taken from the injection-moulded preform, whilst Figure 11 lists the numeric results of the aforesaid analysis.

The values of the specific residual melting enthalpy $\Delta H_{spec}$ contained in the tables of Figures 10 and 11 have been shown in graph form in Figure 12. It should be noted that, in the injection-moulded preform, sample A, taken at the feedhead 112, has a very high specific residual melting $\Delta H_{spec}$, which is more precisely greater than 43 mJ/mg. All the other samples taken from the injection-moulded preform have a specific residual melting enthalpy $\Delta H_{spec}$ that is less than that of sample A. Thus sample A is the most crystalline sample of those taken from the injection-moulded preform.

In the preform 1 according to the invention, sample A taken from the end wall 4 near the longitudinal axis Z has a specific residual melting enthalpy $\Delta H_{spec}$ equal to 7.61 mJ/mg, which is much less than the specific residual melting enthalpy of the corresponding sample from the preform according to the prior art. More in particular, the specific residual melting enthalpy of sample A taken from the preform 1 is less than a fifth of the specific residual melting enthalpy of sample A taken from the known preform.

Further, in the preform according to the prior art the specific residual melting enthalpy of the samples taken along the side wall 105 and indicated by B, F, L and O is significantly less than that of sample A. This confirms that the end wall 104 of the preform according to the prior art, in particular near the feedhead 112, is much more crystalline than the side wall 105 of the same preform.

On the other hand, in the preform 1 according to the invention the specific residual melting enthalpy of sample A is of the same order of magnitude as the specific residual melting enthalpy of any other sample. In the specific case of Figure 10, sample A of the preform 1 even has a specific residual melting enthalpy that is less than that of all the other samples. In general, in the preform according to the invention there is at least one point of the hollow body 2 having a specific residual melting enthalpy that is greater than the specific residual melting enthalpy of sample A.

It should be noted that, in the preform 1 according to the invention, the ratio between the specific residual melting enthalpy of sample A and the specific residual melting enthalpy of sample B, which is the point of the preform 1 having maximum specific residual melting enthalpy, is equal to 0.53. The ratio between the specific residual melting enthalpy of sample A and the specific residual melting enthalpy of sample L, which is the point of the preform 1 having the most similar specific residual melting enthalpy to that of sample A, is on the other hand equal to 0.86.

In a preform having these features, the end wall 4 is provided with a degree of crystallinity that is less than or the same as the degree of crystallinity of the side wall 5. The crystalline zones are thus avoided that in the known preforms cause imperfections in the end wall.

When Figure 9 is examined, it is immediately noted that sample L of the preform according to the prior art has a hysteresis peak P1 near the glass transition temperature $T_g$. This indicates that in the preform according to the prior art residual tensions are present that are due to uneven cooling. On the other hand, as shown in Figure 8, no sample taken from the preform according to the invention has hysteresis peaks near the glass transition temperature. In other words, in all the points of the preform according to the invention the energy absorbed by the sample during heating has a monotonous increasing trend during the glass transition. This confirms that all the zones of the preform according to the invention have been cooled in uniform manner.

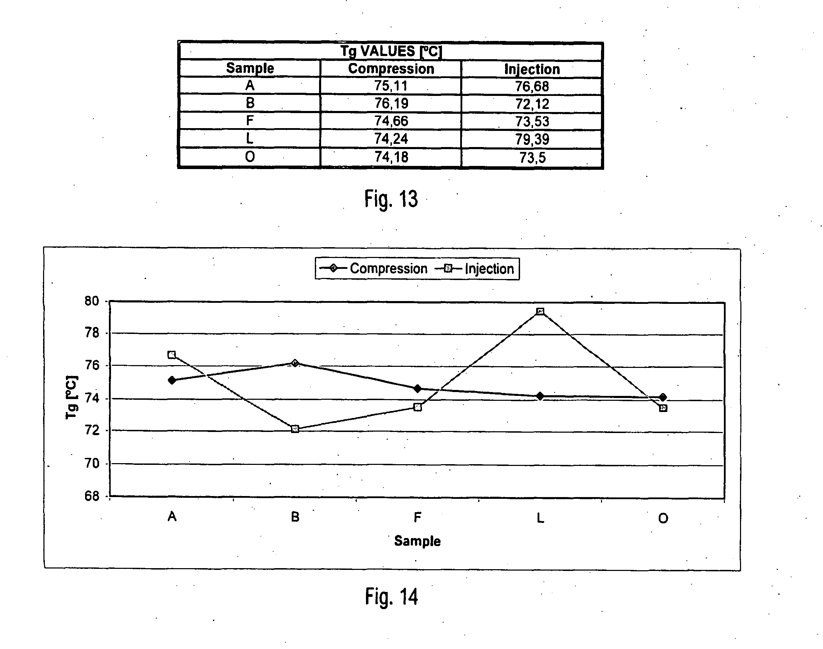

The qualitative considerations set out above regarding the substantially homogeneous cooling of the preform according to the invention are confirmed by the data relating to the glass transition temperature. With this regard, Figure 13 shows the values of the glass transition temperature, measured in samples A, B, F, L, O chosen as shown in Figure 3, in a compression-moulded preform according to the invention and in an injection-moulded preform according to the prior art. These values are shown in graph form in Figure 14.

It should be noted that the glass transition temperature of the preform according to the prior art varies in a significant manner along the longitudinal axis of the preform. In particular, between the maximum glass transition temperature, measured in sample L and equal to 79.39°C, and the minimum glass transition temperature, measured in sample B and equal to 72.12°C, there is a difference of more than 7°C. This difference confirms that the samples taken from the preform according to the prior art had a different thermal history from one another, i.e. that they were cooled in uneven manner, which causes dishomogeneous properties inside the preform.

On the other hand, in the preform according to the invention the difference in glass transition temperature measured along the longitudinal axis Z is not significant. In the specific case shown in Figures 13 and 14, sample B of the compression-moulded preform has the maximum glass transition temperature, equal to 76.19°C, whilst sample O has the minimum glass transition temperature, equal to 74.18°C. The difference between these two values is less than 3°C, more precisely it is approximately equal to 2°C, and is therefore much lower than that found in known preforms. More in general, it can be stated that, in the compression-moulded preforms according to the invention, the difference in glass transition temperature measured between two points arranged along the longitudinal axis Z is of the order of magnitude of the error of the instruments usually used to measure the glass transition temperature.

It should be further noted that in the injection-moulded preform the glass transition temperature decreases passing from sample A to sample B, then increases passing from sample B to sample L, and then decreases again passing from sample L to sample O. In other words, the glass transition temperature varies according to a fluctuating line that has more than one relative maximum point. In the specific case of Figures 13 and 14, two relative maximum points are identifiable respectively at sample A and at sample L.

On the other hand, in the preform according to the invention, the glass transition temperature increases passing from sample A to sample B, after which it decreases passing from sample B to sample O. The line showing how the glass transition temperature varies along the hollow body 2 therefore has a single relative maximum point corresponding to sample B, unlike what occurred in the known preforms. It is also possible to hypothesise a case that is not shown in which the preform 1 according to the invention has a single relative minimum point.

The preforms having the features disclosed above with reference to the glass transition temperature have substantially homogeneous properties along the longitudinal axis Z. In particular, the thermal history of the preform is substantially uniform, which means that the cooling conditions of any two points of the preform are not too different from one another. As a result, the preform is substantially devoid of residual tensions due to different shrinkages along the hollow body 2. This simplifies the subsequent stretch-blow moulding operations and enables good-quality finished products to be obtained.

Further, the considerations set out above with reference to residual melting enthalpy are not only valid for the preforms, but also for the containers, for example the bottles made from the aforesaid preforms.

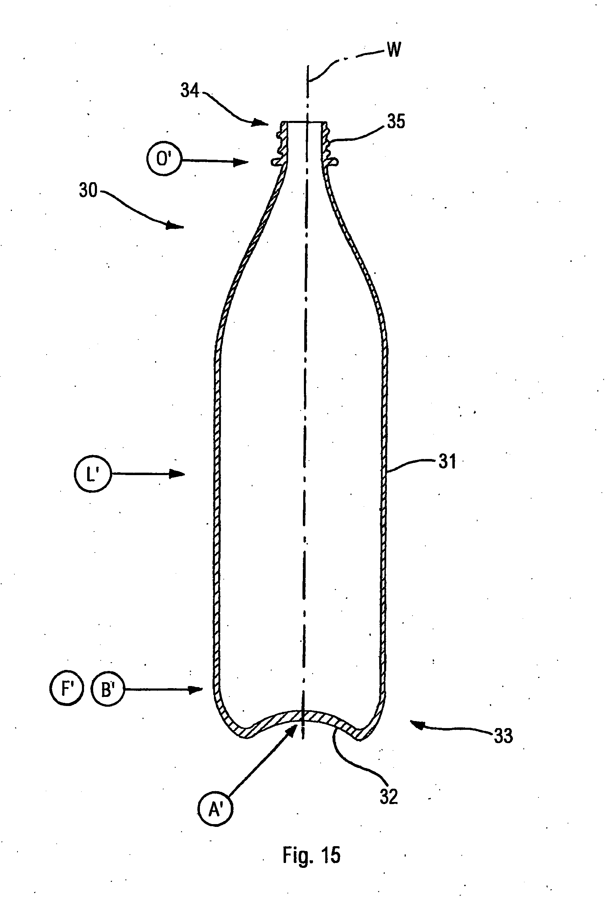

Figure 15 schematically shows a bottle 30 obtained by a stretch-blow moulding process from the preform 1 shown in Figure 3. The bottle 30 comprises a containing body 31, which extends along a main axis W and is intended to receive a liquid, for example a beverage. The containing body 31 is closed by a base wall 32 at a first end zone 33 thereof. The base wall 32 acts as a resting wall enabling the bottle 30 to be rested on a supporting surface that is not shown. The containing body 31 further comprises a second end zone 34, opposite the first end zone 33 and suitable for engaging closing means that is not shown. In the specific example of Figure 15, the second end zone 34 comprises a threaded zone 35 on which a cap can be screwed in order to close the bottle 30.

The containing body 31 is derived from the hollow body 2 of the preform 1, which was deformed during the stretch-blow moulding process. Similarly, the base wall 32 is obtained by deforming the end wall 4. The threaded zone 35 has a shape and dimensions substantially corresponding to those of the mouth 3 of the preform 1, which was not substantially deformed during stretch-blow moulding.

From the bottle 30 a plurality of samples were taken, in positions corresponding to those shown in Figure 3 for samples taken from the preform. In particular, in Figure 15 there is shown the position of samples A', B', F', L', O' respectively corresponding to samples A, B, F, L, O in Figure 3. The samples taken from the bottle 30, after being weighed, were subjected to the DSC analysis as explained previously with reference to Figure 7.

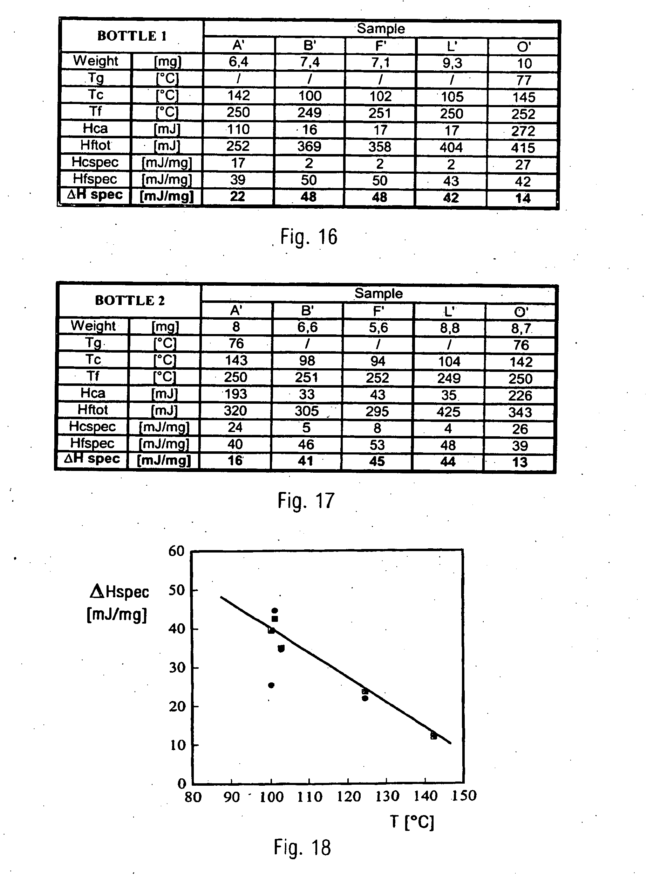

The results of the DSC analysis of two different bottles 30 obtained from preforms of the type shown in Figure 3 are summarised in Figures 16 and 17. It should be noted that samples B', F', L' have a specific residual melting enthalpy that is significantly greater than corresponding samples B, F, L taken from the preform. This is explained by taking into account that, during stretch-blow moulding, the side wall 5 of the preform, like the connecting zone between the side wall 5 and end wall 4, has undergone considerable stretching. As a result, the molecules that formed the side wall 5 and the connecting zone between side wall 5 and end wall 4 arranged themselves parallel to one another and have given rise to ordered structures. The latter, in addition to enabling resistance of the containing body 31 to be increased and the mechanical properties thereof to be improved, are responsible for the increase of specific residual melting enthalpy that can be observed in samples B', F', L' of the bottle with respect to the corresponding samples of the preform.

It should be further noted that sample O' taken from the bottle has a specific residual melting enthalpy that differs little from that of the corresponding sample O taken from the preform. The reason for this is that sample O' was taken at the second end zone 33, which did not undergo substantial deformation with respect to the mouth 3 of the preform. During stretch-blow moulding, no orientation phenomena occurred in the mouth 3 that significantly increased the specific residual melting enthalpy of sample O'.

Lastly, it should be noted that the residual melting enthalpy of sample A' of the bottle has increased with respect to that of sample A of the preform. In fact, sample A' was taken from the base wall 32 at the main axis W. Stretching undergone by this zone during the stretch-blow moulding process, although limited, was nevertheless sufficient to form some orientated zones, which caused an increase in the specific residual melting enthalpy detected in sample A' compared to sample A.

By examining Figures 16 and 17 it should also be noted that the specific residual melting enthalpy of sample A' is significantly lower than the specific melting enthalpy' of the samples taken along the containing body 31, except sample O' taken at the second end zone 34. In particular, sample A' has a specific residual melting enthalpy that is less than half the specific residual melting enthalpy of samples B', F', L'. The specific residual melting enthalpy of sample A' is further comparable to that of sample O'.

A bottle 30 having the properties disclosed above has a base wall 32 the molecules of which have undergone a certain orientation during stretch-blow moulding, which is appreciated as it involves an increase of the mechanical resistance of the base wall 32. This increase occurs because the base wall 2 of the bottle comes from the end wall 4 of the preform, which was substantially amorphous. In this case, stretching causes an increase in mechanical resistance, contrary to what would occur if a crystalline wall were subjected to stretching, which would make the wall more fragile. Further, as the end wall 4, as already said previously, had a low degree of crystallinity, also the degree of crystallinity of the base wall 32 is not high.

This enables phenomena of brittleness of the zone of the base wall 32 near the main axis W to be avoided, ensuring that in that zone no breakage starts during stretch-blow moulding.

Figure 18 shows how specific residual melting enthalpy $\Delta H_{spec}$ varies according to crystallisation temperature $T_c$. Figure 18 refers both to a bottle obtained from a compression-moulded preform, the values of which are indicated by squares, and a bottle obtained from an injection-moulded preform, the values of which are indicated by circles. It should be noted that the values measured in the samples taken from the bottle obtained from a compression-moulded preform are arranged approximately along a straight line.

This is an index of substantially homogeneous properties along the bottle 31. On the other hand, in the bottle obtained from an injection-moulded preform the values $\Delta H_{spec}$ in function of the crystallisation temperature $T_c$ have rather an irregular distribution reflecting the unevenness of the bottle properties.

The considerations set out above with reference to Figures 15 to 18 also apply to containers other than the bottles.

Further, these considerations also apply to containers obtained through single-stage stretch-blow moulding of preforms, i.e. in which the preform is stretch-blow moulded after being moulded without undergoing complete cooling to ambient temperature.

## Claims

1. Preform for obtaining a container, comprising a hollow body (2) having a side wall (5) extending around a longitudinal axis (Z) and an end wall (4) arranged transversely to said longitudinal axis (Z), a point (A) of said end wall (4) having a value of specific residual melting enthalpy ($\Delta H_{spec}$), the specific residual melting enthalpy ($\Delta H_{spec}$) being equal to the difference between the specific total melting enthalpy ($H_{fspec}$) and the specific crystallisation enthalpy ($H_{cspec}$) of the part of amorphous phase that crystallises when it is heated, which are measurable through differential scanning calorimetry (DSC) analysis, **characterised in that** at least one point (B, F, L, O) of said side wall (5) has a further value of specific residual melting enthalpy ($\Delta H_{spec}$) that is greater than said value.

2. Preform according to claim 1, wherein said point (A) of said end wall (4) is positioned in a central region of said end wall (4) near said longitudinal axis (Z).

3. Preform according to claim 1 or 2, wherein said at least one point (B) of said side wall (5) is positioned in a zone in which said side wall (5) is joined to said end wall (4).

4. Preform according to any preceding claim, wherein the ratio between said value and said further value is comprised between 0.5 and 0.9.

5. Preform according to any preceding claim, wherein the difference between the values of glass transition temperature ($T_g$) measured at any two points of said hollow body (2) is not significant.

6. Preform according to claim 5, wherein said difference is less than, or the same as, the measuring error of an instrument usable for measuring the glass transition temperature ($T_g$).

7. Preform according to claim 5 or 6, wherein said difference is less than 5°C.

8. Preform according to claim 7, wherein said difference is less than 3°C.

9. Preform according to claim 8, wherein said difference is approximately equal to 2°C.

10. Preform according to any one of claims 5 to 9, wherein the glass transition temperature ($T_g$) varies along said hollow body (2) according to a function that has a single relative minimum point.

11. Preform according to any one of claims 5 to 10, wherein the glass transition temperature ($T_g$) varies along said hollow body (2) according to a function that has a single relative maximum point.

12. Preform according to any preceding claim, wherein the points of said side wall (5) and of said end wall (4), if subjected to differential scanning calorimetry (DSC) analysis, have curves devoid of hysteresis peaks near the glass transition temperature ($T_g$).

13. Preform according to any preceding claim, obtained through compression moulding.

14. Preform according to claim 13, wherein said end wall (4) is bounded, near said longitudinal axis (Z), by a substantially smooth external surface (18).

15. Preform according to any preceding claim, usable for forming a container through two-stage stretch-blow molding.

16. Container comprising a containing body (31) having a first end zone (33) closed by a base wall (32) and a second end zone (34) suitable for engaging with closing means, **characterised in that** at least one point (A') of said base wall (32) has a value of specific residual melting enthalpy ($\Delta H_{spec}$) that is significantly less than the specific residual melting enthalpy ($\Delta H_{spec}$) of the points (B', F', L') of said containing body (31) distinct from said second end zone (34), the specific residual melting enthalpy ($\Delta H_{spec}$) being equal to the difference between the specific total melting enthalpy ($H_{fspec}$) and the specific crystallisation enthalpy ($H_{cspec}$) of the part of amorphous phase that crystallises when it is heated, which are measurable with differential scanning calorimetry (DSC) analysis.

17. Container according to claim 16, wherein said at least one point (A') of said base wall (32) has a specific residual melting enthalpy ($\Delta H_{spec}$) that is less than half the specific residual melting enthalpy ($\Delta H_{spec}$) of the points (B', F', L') of said containing body (31) distinct from said second end zone.

18. Container according to claim 16 or 17, and comprising a bottle (30).

**19.** Container according to any one of claims 16 to 18, obtained by stretch-blow moulding a compression-moulded preform,

**20.** Container according to any one of claims 16 to 19, wherein said second end zone (34) comprises a threaded zone suitable for engaging with a cap.


**Patentansprüche**

**1.** Vorformling zum Erhalten eines Behälters, enthaltend einen hohlen Körper (2), aufweisend eine Seitenwand (5), die sich um eine Längsachse (Z) erstreckt, und eine Endwand (4), angeordnet quer zu der genannten Längsachse (Z), wobei ein Punkt (A) der genannten Endwand (4) einen Wert der spezifischen Restschmelzenthalpie ($\Delta H_{spec}$) hat, und wobei die spezifische Restschmelzenthalpie ($\Delta H_{spec}$) gleich der Differenz zwischen der spezifischen Gesamtschmelzenthalpie ($H_{fspec}$) und der spezifischen Kristallisationsenthalpie ($H_{cspec}$) des Teils der amorphen Phase ist, der kristallisiert, wenn er erhitzt wird, und welche durch differenziert abtastende Kalorimetrieanalysen (DSC) messbar sind, **dadurch gekennzeichnet, dass** wenigstens ein Punkt (B, F, L, O) der genannten Seitenwand (5) einen weiteren Wert der spezifischen Restschmelzenthalpie ($\Delta H_{spec}$) aufweist, der grösser ist als der genannte Wert.

**2.** Vorformling nach Patentanspruch 1, bei welchem der genannte Punkt (A) der genannten Endwand (4) in einem mittleren Bereich der genannten Endwand (4) und dicht an der genannten Längsachse (Z) positioniert ist.

**3.** Vorformling nach Patentanspruch 1 oder 2, bei welchem der genannte wenigstens eine Punkt (B) der genannten Seitenwand (5) in einem Bereich positioniert ist, in welchem die genannte Seitenwand (5) an die genannte Endwand (4) angeschlossen ist.

**4.** Vorformling nach jedem vorstehenden Patentanspruch, bei welchem das Verhältnis zwischen dem genannten Wert und dem genannten weiteren Wert zwischen 0.5 und 0.9 liegt.

**5.** Vorformling nach jedem vorstehenden Patentanspruch, bei welchem die Differenz zwischen den Werten der Glasübergangstemperatur ($T_g$), gemessen an jedem der beiden Punkte des genannten hohlen Körpers (2), nicht bedeutend ist.

**6.** Vorformling nach Patentanspruch 5, bei welchem die genannte Differenz geringer als oder gleich wie der Messfehler von einem Instrument ist, das zum Messen der Glasübergangstemperatur ($T_g$) benutzbar ist.

**7.** Vorformling nach Patentanspruch 5 oder 6, bei welchem die genannte Differenz geringer ist als 5°C.

**8.** Vorformling nach Patentanspruch 7, bei welchem die genannte Differenz geringer ist als 3°C.

**9.** Vorformling nach Patentanspruch 8, bei welchem die genannte Differenz ungefähr gleich 2°C ist.

**10.** Vorformling nach einem beliebigen der Patentansprüche von 5 bis 9, bei welchem die Glasübergangstemperatur ($T_g$) entlang dem genannten hohlen Körper (2) variiert, und zwar nach einer Funktion, die einen einzigen relativen Minimalpunkt aufweist.

**11.** Vorformling nach einem beliebigen der Patentansprüche von 5 bis 10, bei welchem die Glasübergangstemperatur ($T_g$) entlang dem genannten hohlen Körper (2) variiert, und zwar nach einer Funktion, die einen einzigen relativen Maximalpunkt aufweist.

**12.** Vorformling nach jedem vorstehenden Patentanspruch, bei welchem die Punkte der genannten Seitenwand (5) und der genannten Endwand (4), wenn sie einer differenzierten abtastenden Kalorimetrieanalyse (DSC) unterzogen werden, Kurven ohne Hysteresespitzen in der Nähe der Glasübergangstemperatur ($T_g$) aufweisen.

**13.** Vorformling nach jedem vorstehenden Patentanspruch, erhalten durch Pressformen.

**14.** Vorformling nach Patentanspruch 13, bei welchem die genannte Endwand (4) in der Nähe der genannten Längsachse (Z) durch eine im wesentlichen glatte äussere Oberfläche (18) abgegrenzt ist.

**15.** Vorformling nach jedem vorstehenden Patentanspruch, benutzbar zum Formen eines Behälters durch ein zweistufiges Streckblasformen.

**16.** Behälter, enthaltend einen Aufnahmekörper (31), aufweisend einen ersten Endbereich (33) dicht an einer Bodenwand (32) und einen zweiten Endbereich (34), geeignet, sich mit Schliessmitteln zu verbinden, **dadurch gekennzeichnet, dass** wenigstens ein Punkt (A') der genannten Bodenwand (32) einen Wert der spezifischen Restschmelzenthalpie ($\Delta H_{spec}$) hat, der bedeutend geringer ist als die spezifische Restschmelzenthalpie ($\Delta H_{spec}$) der Punkte (B', F', L') des genannten Aufnahmekörpers (31), die sich von dem genannten Endbereich (34) unterscheiden, wobei die spezifische Restschmelzenthalpie ($\Delta H_{spec}$) gleich der Differenz zwischen der spezifischen Gesamtschmelzenthalpie ($H_{fspec}$) und der spezifischen Kristallisationsenthalpie ($H_{cspec}$) des Teils der amorphen Phase ist, der kristallisiert, wenn er erhitzt wird, und welche durch differenziert abtastende Kalorimetrieanalysen (DSC) messbar sind.

**17.** Behälter nach Patentanspruch 16, bei welchem der genannte wenigstens eine Punkt (A') der genannten Bodenwand (32) eine spezifische Restschmelzenthalpie ($\Delta H_{spec}$) hat, die geringer ist als die Hälfte der spezifischen Restschmelzenthalpie ($\Delta H_{spec}$) der Punkte (B', F', L') des genannten Aufnahmekörpers (31), unterschieden von dem genannten zweiten Endbereich.

**18.** Behälter nach Patentanspruch 16 oder 17 und enthaltend eine Flasche (30).

**19.** Behälter nach einem jeden der Patentansprüche von 16 bis 18, erhalten durch Streckblasformen eines pressgeformten Vorformlings.

**20.** Behälter nach einem jeden der Patentansprüche von 16 bis 19, bei welchem der genannte zweite Endbereich (34) einen Gewindeabschnitt aufweist, geeignet zum Verbinden mit einer Verschlusskappe.

## Revendications

**1.** Préforme permettant d'obtenir un contenant, comprenant un corps creux (2) pourvu d'une paroi latérale (5) se développant autour d'un axe longitudinal (Z) et une paroi d'extrémité (4) disposée transversalement par rapport audit axe longitudinal (Z), un point (A) de ladite paroi d'extrémité (4) ayant une valeur d'enthalpie de fusion résiduelle spécifique ($\Delta H_{spec}$), l'enthalpie de fusion résiduelle spécifique ($\Delta H_{spec}$) étant égale à la différence entre l'enthalpie de fusion totale spécifique ($H_{fspec}$) et l'enthalpie de cristallisation spécifique ($H_{cspec}$) de la partie de phase amorphe qui cristallise lorsqu'elle est chauffée, qui sont mesurables par une analyse de calorimétrie à balayage différentiel (DSC), **caractérisée en ce qu'**au moins un point (B, F, L, O) de ladite paroi latérale (5) a une ultérieure valeur d'enthalpie de fusion résiduelle spécifique ($\Delta H_{spec}$) qui est supérieure à ladite valeur.

**2.** Préforme selon la revendication 1, dans laquelle ledit point (A) de ladite paroi d'extrémité (4) est positionné dans une zone centrale de ladite paroi d'extrémité (4) à proximité dudit axe longitudinal (Z).

**3.** Préforme selon la revendication 1 ou 2, dans laquelle au moins un point (B) de ladite paroi latérale (5) est positionné dans une zone dans laquelle ladite paroi latérale (5) est jointe à ladite paroi d'extrémité (4).

**4.** Préforme selon n'importe laquelle des revendications précédentes, dans laquelle le rapport entre ladite valeur et ladite ultérieure valeur est compris entre 0,5 et 0,9.

**5.** Préforme selon n'importe laquelle des revendications précédentes, dans laquelle la différence entre les valeurs de température de transition vitreuse ($T_g$) mesurées en correspondance de deux points quelconques dudit corps creux (2) n'est pas significative.

**6.** Préforme selon la revendication 5, dans laquelle ladite différence est inférieure, ou est égale, à l'erreur de mesure d'un instrument utilisable pour mesurer la température de transition vitreuse ($T_g$).

**7.** Préforme selon la revendication 5 ou 6, dans laquelle ladite différence est inférieure à 5°C.

**8.** Préforme selon la revendication 7, dans laquelle ladite différence est inférieure à 3°C.

**9.** Préforme selon la revendication 8, dans laquelle ladite différence est approximativement égale à 2°C.

**10.** Préforme selon n'importe laquelle des revendications 5 à 9, dans laquelle la température de transition vitreuse ($T_g$) varie le long dudit corps creux (2) selon une fonction qui ne présente qu'un seul point de minimum relatif.

**11.** Préforme selon n'importe laquelle des revendications 5 à 9, dans laquelle la température de transition vitreuse ($T_g$) varie le long dudit corps creux (2) selon une fonction qui ne présente qu'un seul point de maximum relatif.

**12.** Préforme selon n'importe laquelle des revendications précédentes, dans laquelle les points de ladite paroi latérale (5) et de ladite paroi d'extrémité (4), s'ils sont soumis à une analyse de calorimétrie à balayage différentiel (DSC), présentent des courbes privées de pics d'hystérésis à proximité de la température de transition vitreuse ($T_g$).

**13.** Préforme selon n'importe laquelle des revendications précédentes, obtenue par moulage à compression.

**14.** Préforme selon la revendication 13, dans laquelle ladite paroi d'extrémité (4) est délimitée, à proximité dudit axe longitudinal (Z), par une surface externe substantiellement lisse (18).

**15.** Préforme selon n'importe laquelle des revendications précédentes, utilisable pour former un conteneur par moulage par tirage-soufflage à deux phases.

**16.** Contenant comprenant un corps conteneur (31) pourvu d'une première zone d'extrémité (33) fermée par une paroi de base (32) et une seconde zone d'extrémité (34) apte à engager des moyens de fermeture, **caractérisé en ce qu'**au moins un point (A') de ladite paroi de base (32) présente une valeur d'enthalpie de fusion résiduelle spécifique ($\Delta H_{spec}$) qui est significativement inférieur à l'enthalpie de fusion résiduelle spécifique ($\Delta H_{spec}$) des points (B', F', L') dudit corps conteneur (31) distinct de ladite seconde zone d'extrémité (34), l'enthalpie de fusion résiduelle spécifique ($\Delta H_{spec}$) étant égale à la différence entre l'enthalpie de fusion totale spécifique ($H_{fspec}$) et l'enthalpie de cristallisation spécifique ($H_{cspec}$) de la partie de phase amorphe qui cristallise lorsqu'elle est chauffée, qui est mesurable par analyse de calorimétrie à balayage différentiel (DSC).

**17.** Contenant selon la revendication 16, dans lequel ledit au moins un point (A') de ladite paroi de base (32) présente une enthalpie de fusion résiduelle spécifique ($\Delta H_{spec}$) inférieure à la moitié de l'enthalpie de fusion résiduelle spécifique ($\Delta H_{spec}$) des points (B', F', L') dudit corps conteneur (31) distinct de ladite seconde zone d'extrémité.

**18.** Contenant selon la revendication 16 ou 17, comprenant une bouteille (30).

**19.** Contenant selon n'importe laquelle des revendications 16 à 18, obtenu par étirage-soufflage d'une préforme moulée par compression.

**20.** Contenant selon n'importe laquelle des revendications 16 à 19, dans lequel ladite seconde zone d'extrémité (34) comprend une zone filetée apte à engager un bouchon.

Fig. 1

PRIOR ART

Fig. 2

PRIOR ART

EP 1 986 831 B1

Fig. 3

EP 1 986 831 B1

Fig. 4

Fig. 5

Fig. 6

EP 1 986 831 B1

Fig. 7

EP 1 986 831 B1

Fig. 8

Fig. 9

| COMPRESSION-MOULDED PREFORM | | | | | |
|---|---|---|---|---|---|
| Sample | Weight [mg] | Hca [mJ] | Hftot [mJ] | Hcspec [mJ/mg] | Hfspec [mJ/mg] | ΔH spec [mJ/mg] |
| A | 6,5 | 146,52 | 195,96 | 22,54 | 30,15 | 7,61 |
| B | 5 | 107,49 | 179,26 | 21,50 | 35,85 | 14,35 |
| F | 5,4 | 107,49 | 172,98 | 19,91 | 32,03 | 12,13 |
| L | 8 | 187,80 | 258,95 | 23,48 | 32,37 | 8,89 |
| O | 5,4 | 134,94 | 183,82 | 24,99 | 34,04 | 9,05 |

Fig. 10

| INJECTION-MOULDED PREFORM | | | | | |
|---|---|---|---|---|---|
| Sample | Weight [mg] | Hca [mJ] | Hftot [mJ] | Hcspec [mJ/mg] | Hfspec [mJ/mg] | ΔH spec [mJ/mg] |
| A | 9,4 | 0,00 | 406 | 0,00 | 43,22 | 43,22 |
| B | 5,9 | 121,52 | 194 | 20,60 | 32,86 | 12,26 |
| F | 6,9 | 183,36 | 233 | 26,57 | 33,83 | 7,26 |
| L | 10 | 238,53 | 334 | 23,85 | 33,41 | 9,56 |
| O | 13 | 197,87 | 306 | 15,22 | 23,54 | 8,32 |

Fig. 11

Fig. 12

18

| Tg VALUES [°C] | | |
| --- | --- | --- |
| Sample | Compression | Injection |
| A | 75,11 | 76,68 |
| B | 76,19 | 72,12 |
| F | 74,66 | 73,53 |
| L | 74,24 | 79,39 |
| O | 74,18 | 73,5 |

Fig. 13

Fig. 14

Fig. 15

| BOTTLE 1 | | Sample | | | | |
|---|---|---|---|---|---|---|
| | | A' | B' | F' | L' | O' |
| Weight | [mg] | 6,4 | 7,4 | 7,1 | 9,3 | 10 |
| Tg | [°C] | / | / | / | / | 77 |
| Tc | [°C] | 142 | 100 | 102 | 105 | 145 |
| Tf | [°C] | 250 | 249 | 251 | 250 | 252 |
| Hca | [mJ] | 110 | 16 | 17 | 17 | 272 |
| Hftot | [mJ] | 252 | 369 | 358 | 404 | 415 |
| Hcspec | [mJ/mg] | 17 | 2 | 2 | 2 | 27 |
| Hfspec | [mJ/mg] | 39 | 50 | 50 | 43 | 42 |
| ΔH spec | [mJ/mg] | 22 | 48 | 48 | 42 | 14 |

Fig. 16

| BOTTLE 2 | | Sample | | | | |
|---|---|---|---|---|---|---|
| | | A' | B' | F' | L' | O' |
| Weight | [mg] | 8 | 6,6 | 5,6 | 8,8 | 8,7 |
| Tg | [°C] | 76 | / | / | / | 76 |
| Tc | [°C] | 143 | 98 | 94 | 104 | 142 |
| Tf | [°C] | 250 | 251 | 252 | 249 | 250 |
| Hca | [mJ] | 193 | 33 | 43 | 35 | 226 |
| Hftot | [mJ] | 320 | 305 | 295 | 425 | 343 |
| Hcspec | [mJ/mg] | 24 | 5 | 8 | 4 | 26 |
| Hfspec | [mJ/mg] | 40 | 46 | 53 | 48 | 39 |
| ΔH spec | [mJ/mg] | 16 | 41 | 45 | 44 | 13 |

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1208957 A
- US 4820795 A